# EUROPÄISCHE PATENTANMELDUNG

(11) **EP 0 828 086 A2**
(43) Veröffentlichungstag der Anmeldung: **11.03.1998**
(21) Anmeldenummer: 97113065.3
(22) Anmeldetag: 30.07.1997
(51) Int. Cl.: F16F 1/38

(54) **Elastisches Lager, insbesondere zur Lagerung eines Motors in einem Kraftfahrzeug**

(30) Priorität: 14.08.1996 DE 19632771
(71) Anmelder: BASF AKTIENGESELLSCHAFT, 67056 Ludwigshafen (DE)
(72) Erfinder: Burlage, Thomas, 49134 Wallenhorst (DE); Giesen, Klaus, 49401 Damme (DE)

(57) **Zusammenfassung**

Zur Lagerung eines Motors in einem Kraftfahrzeug wird ein elastisches Lager vorgeschlagen, das aus einem starren Gehäuse (1) zum Verbinden z.B. mit der Karosserie, einer starren innenliegenden Buchse (3) zum Verbinden mit z.B. dem Motor und einer zwischen Gehäuse und Buchse eingesetzten Feder (2) besteht. Die Feder aus elastomerem Material ist an der Außenhülse mindestens einseitig befestigt. Sie umfaßt, fest verbunden die Mantelfläche der Buchse (3). Die Feder ist so bemessen, daß sie den Innenraum des Gehäuses nicht ganz ausfüllt.

## Beschreibung

Die Erfindung betrifft ein elastisches Lager, insbesondere zur Lagerung eines Motors in einem Kraftfahrzeug, mit einem starren, äußeren Gehäuse zum Verbinden mit z.B. der Fahrzeugkarosserie, einer starren, im Gehäuse angeordneten Buchse zum Verbinden mit z.B. dem Motor und einer zwischen Gehäuse und Buchse eingesetzten Feder aus elastomerem Material.

Derartige Lager sind in unterschiedlichsten Ausgestaltungen bekannt. Als Traglager unten am Motor angebracht sollen sie die vertikalen Bewegungen des Motors dämpfen. Als Stützlager, oben oder seitlich am Motor angebracht, begrenzen sie im wesentlichen die horizontalen Motorbewegungen.

Forderung an die Stützlager sind: im Bereich der Leerlaufdrehzahlen des Motors und bei gleichbleibender Fahrt sollen sie eine geringe dynamische Steifigkeit, also einen flachen Verlauf ihrer Kraft-Verformungskurve haben. Bei sich ändernden Drehzahlen, also beim Beschleunigen oder Bremsen des Fahrzeugs, sollen sie große dynamische Steifigkeit, also einen steilen und progressiven Verlauf ihrer Kraft-Verformungskurve haben.

Hierzu wird nach der DE-A-34 37 784 eine Triebwerksaufhängung für ein Kraftfahrzeug vorgeschlagen, welche mit dem Triebwerk verbundene Träger aufweist, die jeweils unter Zwischenschaltung eines Elastomerteils eines Dämpfungsblocks mit der Karosserie verbunden sind. Dabei bildet das Elastomerteil mit dem Träger eine Einheit, dergestalt, daß der Träger mit einem Zapfen in eine Ausnehmung des Elastomerteils greift, wobei Zapfen und Träger form- und/oder kraftschlüssig miteinander verbunden sind. Da das Elastomerteil seine starre Außenhülse vollständig ausfüllt, hat es immer nur einen steilen und progressiven Verlauf seiner Kraft-Verformungskurve.

Ein anderes elastisches Lager, insbesondere für den Antriebsmotor in Kraftfahrzeugen, ist in der DE-C-30 00 511 beschrieben. Hier hat der zwischen einer starren Außenhülse und einer starren Innenhülse eingesetzte Federkörper aus Gummi zwar zusätzliche Ausnehmungen, jedoch sind diese ganz mit einer plastischen oder viskosen Dämpfungsmasse gefüllt.

Der Erfindung liegt demgegenüber die Aufgabe zugrunde, ein elastisches Lager der eingangs genannten Art anzugeben, das die gewünschte Kraft-Verformungskurve mit anfangs geringem, dann aber steilem und progressivem Verlauf möglich macht.

Gelöst wird diese Aufgabe dadurch, daß die Feder die Buchse umschließt und den Innenraum des Gehäuses nicht vollständig ausfüllt.

Die Feder füllt das Gehäuse nicht ganz aus und ist mindestens an einer Seite mit dem Gehäuse verbunden. Die Verbindung ist kraft- oder formschlüssig. Die Feder ist an drei oder weniger Seiten nicht mit dem Gehäuse verbunden.

Die Feder kann an den Seiten, an denen sie nicht mit dem Gehäuse verbunden ist, in der Sollage einen Abstand zur Wand des Gehäuses haben oder ohne Vorspannung an dieser Wand anliegen. Die zu diesen Seiten des äußeren Gehäuses zeigenden Seiten der Feder können spitz oder konisch zulaufend ausgebildet sein.

Die Feder kann an den Seiten, an denen sie nicht mit dem Gehäuse verbunden ist, durch die Wahl eines Übermaßes gegenüber den Sollabmessungen des Gehäuses vorgespannt sein. Bei einer Relativbewegung des Gehäuses gegenüber der Buchse gleitet dann die Feder unter der sich aus der Vorspannung ergebenden Andrückkraft an der Wand des Gehäuses entlang. Dadurch entsteht Reibung.

Das elastomere Material der Feder kann Gummi oder ein kompaktes oder ein zelliges Polyurethan-Elastomer sein. Das letztere hat den Vorteil, bei Druckbeanspruchung eine progressive Kraft-Verformungskurve zu haben.

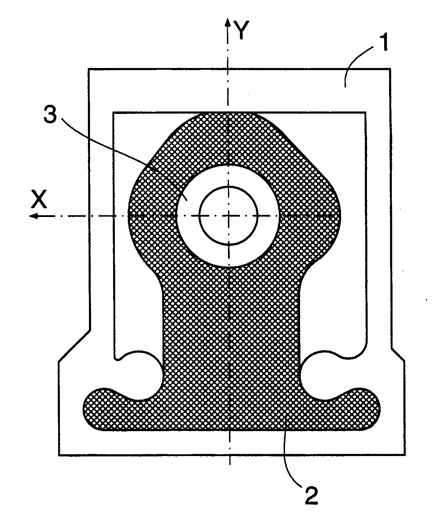

Die Erfindung wird nachfolgend unter Hinweis auf die Zeichnung anhand eines Ausführungsbeispiels erläutert.

Das elastische Lager besteht aus dem äußeren Gehäuse (1). Innen, an seiner Unterseite ist die Feder aus elastomerem Material (2) in diesem Falle formschlüssig mit dem äußeren Gehäuse verbunden. Die Feder umfaßt die innere Buchse (3), mit der sie in diesem Falle kraftschlüssig verbunden ist. Nicht dargestellt ist die feste Verbindung des Gehäuses mit der Karosserie oder dem Motor und die feste Verbindung der Buchse mit dem Motor oder der Karosserie des Kraftfahrzeugs.

Das elastische Lager ist im Kraftfahrzeug so eingebaut, daß Relativbewegungen zwischen Motor und Karosserie hauptsächlich in Richtung der Achse X auftreten. Bei diesen Bewegungen wird die Feder zuerst nur auf Biegung und Schub beansprucht. Gegen diese zeigt sie nur geringen Verformungswiderstand. Anfangs hat so ihre Kraft-Verformungskurve den gewünschten flachen Verlauf. Bei größer werdenden Relativbewegungen kommen die seitlichen Flächen der Feder aus elastomerem Material zum Anliegen an die Innenseiten des Gehäuses. Die Feder wird jetzt noch auf Druck beansprucht. Sie hat so einen steilen und progressiven Verlauf ihrer Kraft-Verformungskurve. In Richtung Y des elastischen Lagers ist die Feder vor dem Zusammenbau des Lagers länger als das Innenmaß des Gehäuses. Die Feder ist gegenüber dem Gehäuse vorgespannt. Bei Bewegung der Feder in Richtung X reibt sie bei Vorhandensein einer Andrückkraft an der Innenwand des Gehäuses. Dadurch entsteht Reibung, die sich im Lager als zusätzliche Dämpfung bemerkbar macht.

## Patentansprüche

1. Elastisches Lager, insbesondere zur Lagerung eines Motors in einem Kraftfahrzeug, mit einem starren, äußeren Gehäuse (1) zur Befestigung z.B. an der Karosserie, einer starren, inneren Buchse (3) zur Befestigung mit z.B. dem Motor und einer zwischen Gehäuse (1) und Buchse (3) eingesetzten Feder aus elastomerem Material (2), dadurch gekennzeichnet, daß die Feder die Buchse umschließt und den Innenraum des Gehäuses nicht vollständig ausfüllt.

2. Elastisches Lager nach Anspruch 1, dadurch gekennzeichnet, daß die Feder (2) an drei oder weniger Seiten des Gehäuses (1) in der unbelasteten Sollage des Lagers einen Abstand zur Innenwandseite des Gehäuses (1) hat oder diese kraftlos berührt.

3. Elastisches Lager nach Anspruch 1, dadurch gekennzeichnet, daß die Feder (2) an einer oder mehreren Seiten des Gehäuses (1), an denen sie nicht fest mit diesem verbunden ist, unter Vorspannung anliegt.

4. Elastisches Lager nach Anspruch 1, dadurch gekennzeichnet, daß das elastomere Material der Feder (2) ein Gummi, ein kompaktes oder ein zelliges Polyurethan-Elastomer ist.
